# EUROPEAN PATENT APPLICATION

(11) **EP 4 477 765 A2**
(43) Date of publication of application: **18.12.2024**
(21) Application number: 24181369.0
(22) Date of filing: 11.06.2024
(51) Int. Cl.: C21B 5/00, C21B 7/24, C21C 5/46, F27B 3/28, F27D 21/00, G01B 7/02, G01F 23/284

(54) **FURNACE WITH LEVEL DETECTION SYSTEM**

(30) Priority: 13.06.2023 NL 2035086
(71) Applicant: Metix (Proprietary) Limited, 2196 Gauteng (ZA)
(72) Inventor: KOORZEN, Eugene William, 0157 Centurion (ZA); LOTTER, Gabriel Jacobs, 0181 Groenkloof (ZA); HOEK, Riaan, 0157 Centurion (ZA)
(74) Representative: Seemann & Partner Patentanwälte mbB

(57) **Abstract**

The furnace 10 comprises a vessel 12 having a centre axis extending between a roof and a base. The vessel holds a body 20 of material having an upper surface 24 having an upper level lᵤ. The furnace comprises a non-contact sensor 30.1 for sensing a distance 32 between a reference point and a position on the upper surface. The non-contact sensor comprises an electromagnetic signal transceiver 36, 38, an antenna 40 for launching the signal towards the upper surface and receiving a reflection of the signal and a signal guide 46 extending between the transceiver and the antenna. The transceiver is located at one of a) a level lower than the upper level lᵤ and b) a level higher than the upper level lᵤ and beyond a first line 39 which is spaced a distance d₀>0 from the layer on a line 41 perpendicular to the centre axis.

## Description

### INTRODUCTION AND BACKGROUND

This invention relates to furnaces and more particularly to an electric arc furnace with a feed material level detection system.

In EP 2 564141 B1 there is disclosed a furnace comprising a bottom, at least one side wall and a roof which collectively form a furnace vessel to contain material being processed in the furnace. The furnace comprises at least one non-contact sensor that is used to determine the position or level of the material in the furnace, relative to the sensor. Based on the level of the material in the furnace, one or more operating parameters of the furnace can be modified, including, for example the rate at which additional material is introduced into the vessel and the rate at which material is drawn from the vessel. As shown in the attached figure 1, (which is also figure 1 of EP 2 564141 B1), the sensor 110 is positioned directly above the feed material layer 120. The sensor typically comprises at least one transmitter in a fixed position directly above the feed material layer and at least one receiver directly above the feed material layer. The sensor 110 may be provided in the roof 106 alternatively below the roof further alternatively above the roof, but in all cases directly above the feed material layer 120. In these circumstances, a special housing or shield 134 is provided at least partially around each non-contact sensor 110 to electromagnetically shield the non-contact sensor from electromagnetic interference ("EMI") present between the non-contact sensor 110 and the feed material layer 120. In at least some embodiments, the EMI shield 134 comprises, at a bottom end thereof facing the layer, a thermal radiation shield 136 in the form of a replaceable cassette containing refractory cloth.

The above configuration and arrangement of the at least one non-contact sensor is not suitable for at least some applications in the sense that it may be too complex to commission and/or maintain and service. It may also be too exposed to the hostile internal furnace environment, too bulky and too expensive.

### OBJECT OF THE INVENTION

Accordingly, it is an object of the present invention to provide an electric furnace with which the applicant believes the aforementioned disadvantages may at least be alleviated or which may provide a useful alternative for the known furnaces.

### SUMMARY OF THE INVENTION

According to the invention there is provided an electric furnace comprising:
- at least one electrode;
- a vessel comprising a base, at least one sidewall and a roof region comprising a roof, the vessel holding a body of material to be processed, the vessel having a centre axis extending between the roof and the base and the body of material comprising at least one layer having an upper surface having an upper level (lᵤ) and a lower level (II), the at least one electrode extending through the roof into the vessel; and
- at least one non-contact sensor for sensing a distance between a reference point and a position on the upper surface, the non-contact sensor comprising an electromagnetic signal transmitter, an electromagnetic signal receiver, a launcher of the electromagnetic signal towards the upper surface and which launcher is located spaced above the upper surface in the roof region of the furnace, a collector for a reflection of the launched signal from the upper surface, a signal guide between at least one of a) the transmitter and the launcher and b) the receiver and the collector and wherein at least one of the transmitter and the receiver is located externally the vessel at one of: a) a level lower than the upper level (lᵤ) of the upper surface; and b) a level higher than the upper level (lᵤ) of the upper surface and beyond a first line which is spaced a distance d₀ > 0 from the layer on a second line perpendicular to the centre axis and which first line extends parallel to the centre axis.

The roof region comprises the roof itself and regions immediately adjacent the roof above and below the roof respectively.

The furnace may be an electric arc furnace.

The furnace may be a metallurgical furnace.

The layer may be a top layer of feed material.

The at least one non-contact sensor may be connected to a controller for generating data relating to the sensed distance.

In some embodiments the furnace may comprise a plurality of said non-contact sensors connected to the controller, each of said non-contact sensors for sensing a respective distance between a respective reference point and a respective one of distributed positions on the upper surface, the controller being operative to generate from the respective sensed distances profile data relating to the upper surface.

In some embodiments the transmitter and the receiver may be located at a level lower than the upper level of the upper surface.

The transmitter and the receiver may be located at a level between the upper level and a lower level of the upper surface.

The transmitter and the receiver may be located adjacent an external face of the at least one sidewall of the vessel.

Alternatively, the transmitter and the receiver may be located spaced from the vessel.

In other embodiments, the transmitter and the receiver may be located at a level higher than the upper level of the upper surface.

The at least one non-contact sensor may comprise any suitable type of sensor, including, for example, a laser sensor, an automated sounding sensor, an acoustic sensor, an optical sensor (including digital image processing or optical sensing), a Muon particle sensor a pulsed or frequency modulated electromagnetic sensor, an ultrasound sensor, a yo-yo sensor, but preferably is a radar sensor.

The radar sensor may comprise a microwave radar transceiver device.

The launcher and collector may be combined in any suitable antenna, such as a horn antenna.

A waveguide may connect the transceiver device to the antenna.

The furnace may comprise a material feed arrangement at a feed port in the roof, the material feed arrangement may comprise a box defining an inlet for feed material in a top wall of the box and an outlet for feed material in a bottom wall of the box, the inlet being linearly offset relative to the outlet and the launcher and collector are located linearly in line with the outlet to have a direct line of sight through the outlet.

The furnace may have any suitable shape such as rectangular, square and circular, to name only a few.

According to another aspect of the invention there is provided an electric furnace comprising:
- at least one electrode;
- a vessel comprising a base, at least one sidewall and a roof region comprising a roof, the vessel holding a body of material to be processed, the vessel having a centre axis extending between the roof and the base and the body of material comprising at least one layer having an upper surface, the at least one electrode extending through the roof into the vessel; and
- at least one non-contact sensor for sensing a distance between a reference point and a position on the upper surface, the non-contact sensor comprising an electromagnetic signal transceiver device, an antenna located spaced above the upper surface in the roof region of the furnace and a signal guide extending between the electromagnetic signal transceiver device and the antenna and wherein the transceiver device is located externally the vessel at a predetermined position where at least one of the vessel and distance attenuates electromagnetic interference (EMI) inside the vessel to such an extent that an EMI shield for the transceiver device over and above an original manufacturer housing for the transceiver device is dispensed with.

According to yet another aspect of the invention there is provided a method of operating an electric furnace comprising a vessel comprising a base, at least one sidewall and a roof region comprising a roof, the vessel holding a body of material to be processed, the body of material comprising at least one layer having an upper surface; at least one electrode extending through the roof into the vessel; and at least one non-contact sensor for sensing a distance between a reference point and a position on the upper surface, the non-contact sensor comprising an electromagnetic signal transceiver device, an antenna located spaced above the upper surface in the roof region of the furnace and a signal guide extending between the electromagnetic signal transceiver device and the antenna, the method comprising:
- locating the transceiver device externally the vessel;
- utilizing the signal guide and at least one of the vessel and distance to the transceiver device to attenuate electromagnetic interference (EMI) existing inside the vessel to such an extent that at the transceiver device no EMI shield for the transceiver device over and above an original manufacturer housing for the transceiver device is provided.

### BRIEF DESCRIPTION OF THE ACCOMPANYING DIAGRAMS

The invention will now further be described, by way of example only, with reference to the accompanying diagrams wherein:

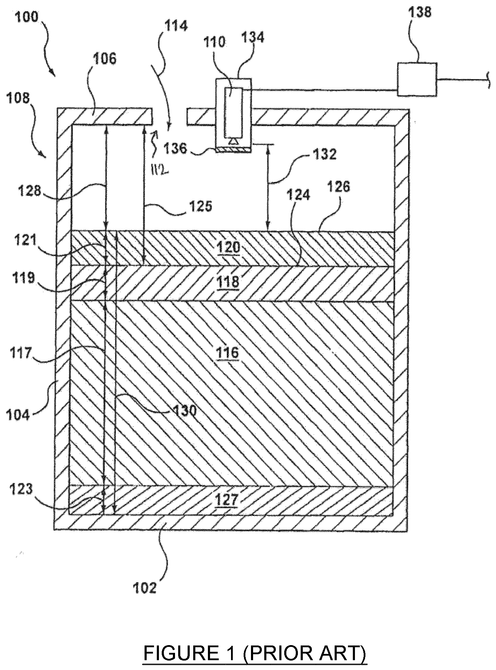

- figure 1: is a diagrammatic view or a prior art metallurgical furnace;
- figure 2: is a diagrammatic view, partially in section, of a first example embodiment of an electric furnace;
- figure 3: is a similar view of a second example embodiment of the furnace;
- figure 4: is yet a further similar view of a third example embodiment of the furnace; and
- figure 5: is a diagrammatic view of a material feed assembly for the furnace, the feed assembly comprising, or, housing an antenna.

### DESCRIPTION OF A PREFERRED EMBODIMENT OF THE INVENTION

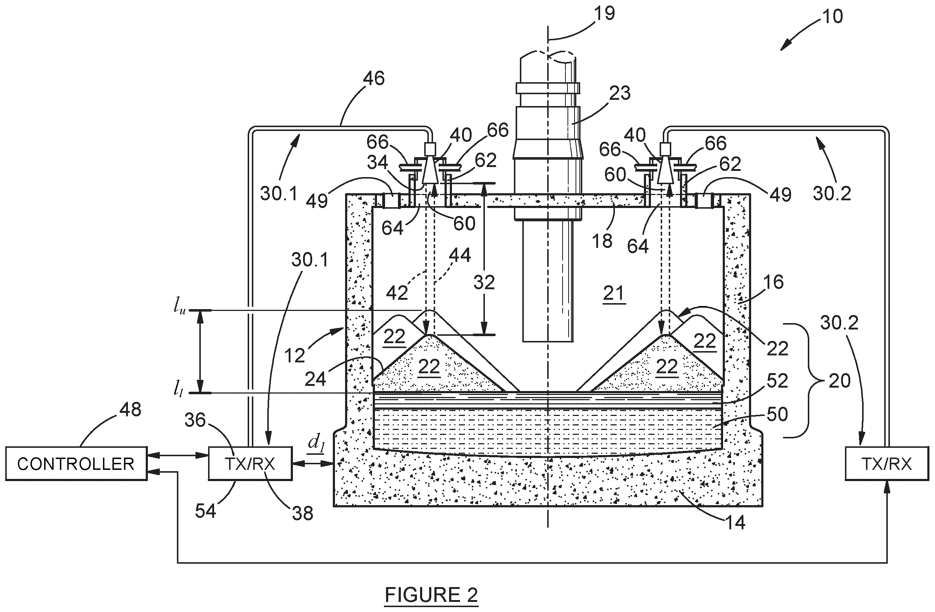

A first example embodiment of an electric furnace is generally designated by the reference numeral 10 in figures 2 to 4.

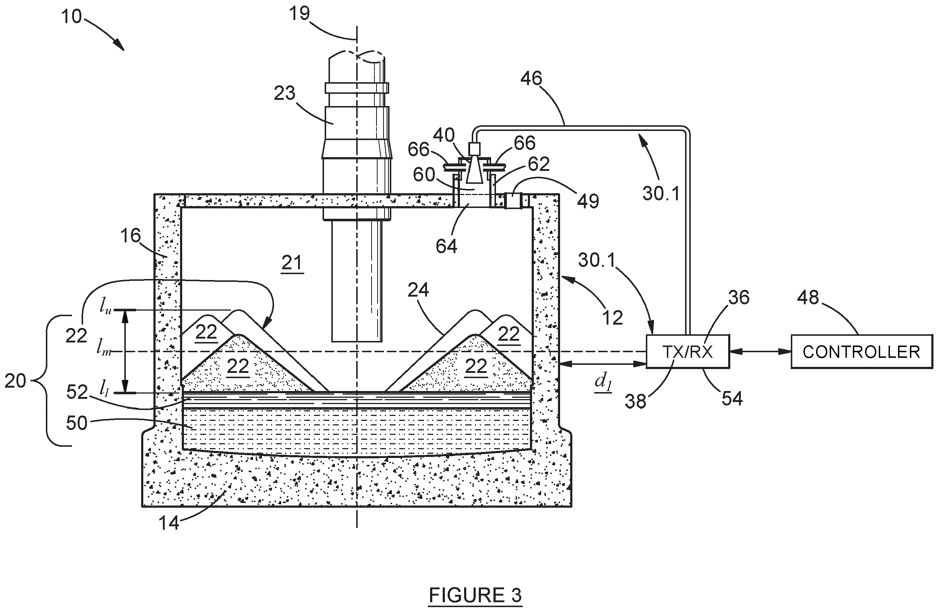

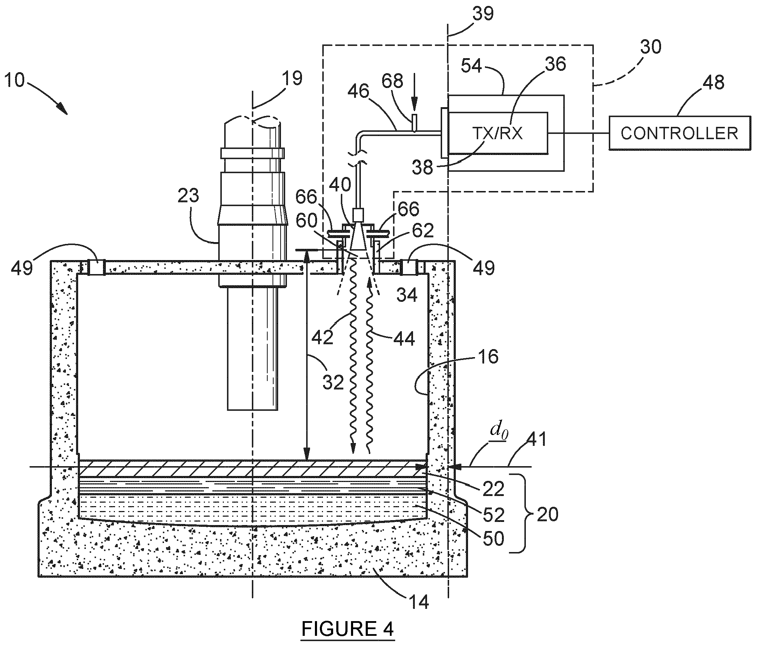

The electric furnace 10 comprises a vessel 12 comprising a base 14, at least one sidewall 16 and a roof 18 in a roof region of the furnace. The vessel has a centre axis 19 extending between the roof and the base. The vessel defines a chamber 21 holding a body 20 of material to be processed. At least one electrode 23 extends through the roof towards the body. The body comprises at least one layer such as a top layer 22 of feed material having an upper surface 24. The upper surface has an upper level lᵤ and a lower level lₗ. The furnace 10 further comprises at least one non-contact sensor 30.1 and 30.2 for sensing a distance 32 between a reference point (such as point 34) and a position on the upper surface 24. The at least one non-contact sensor 30.1 comprises an electromagnetic signal transmitter 36, an electromagnetic signal receiver 38, a launcher 40 of the electromagnetic signal 42 towards the upper surface 24 and which launcher is located spaced above the upper surface, a collector 40 for a reflection 44 of the launched signal from the upper surface. A signal guide 46 extends between at least one of a) the transmitter 36 and the launcher 40 and b) the receiver 38 and the collector 40. At least one of the transmitter 36 and the receiver 38 is located at one of a) a level lower than the upper level lᵤ of the upper surface 24 (as shown in figures 2 and 3); and b) a level higher than the upper level lᵤ of the upper surface 24 and beyond a first line 39 which is spaced a distance d₀ > 0 from the layer 22 on a second line 41 perpendicular to the centre axis and which first line 39 extends parallel to the centre axis (as shown in figure 4).

Referring to figures 2 to 4, the at least one non-contact sensor 30.1, 30.2 is connected to a controller 48 for generating data relating to the sensed distance 32.

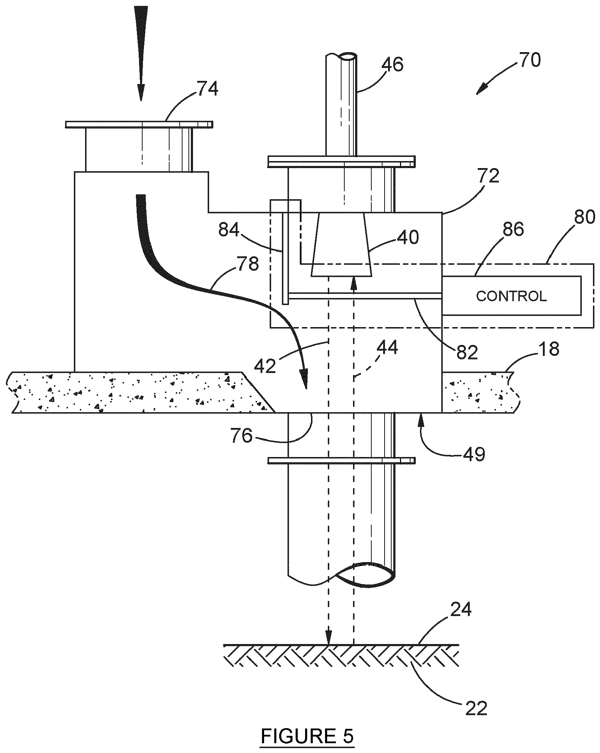

At least one feed port 49 for the feed material is defined in roof 18. A feed chute (not shown) communicating with the port 49 may be provided. As will be described in more detail below with reference to figure 5, in some embodiments a feed assembly or deadbox 70 may be provided above or in the roof 18.

The body of material 20 comprises a burden comprising a body of molten metal 50, a layer of slag 52 on the body of molten metal and the layer 22 of feed material on the layer of slag. It will be appreciated that the upper surface 24, which extends between the sidewalls of the vessel, has a three-dimensional profile extending between the lower level lₗ and the upper level lᵤ. It will further be appreciated that this profile does not remain static, but is dynamic and changes during use, as feed material is added and processed molten metal, matte and/or slag are tapped from the furnace.

Accordingly, in an example embodiment, a plurality of non-contact sensors 30.1 and 30.2 are provided to monitor the level at distributed locations on the upper surface 24. Each of said non-contact sensors being configured to sense a respective distance between a respective reference point and a respective one of distributed positions on the upper surface 24 and the controller is operative to generate from the respective sensed distances, profile data relating to the upper surface 24.

The non-contact sensor may be any suitable sensor, but preferably comprises a microwave radar sensor, such as that being sold under the trade name VEGA or Siemens, for example. The radar sensor comprises a radar transceiver device 36, 38 housed in an original manufacturer ("OM") housing 54. The transceiver device 36,38 comprises the transmitter 36 and the receiver 38.

The launcher and collector may be embodied in a horn antenna 40. The horn antenna 40 is fitted in a suitable position in the roof region, such as below the roof 18 (not shown), in a passage defined in the roof 18 (not shown) or above the passage, as shown in figures 2 to 4.

The horn antenna 40 may be mounted in a chamber 60 defined by an upstand 62 mounted in a passage 64 in the roof 18. The chamber 60 may communicate with feed conduits 66 for a suitable cooling fluid, to cool an outer surface of the horn antenna.

A waveguide 46 which is secured at one end thereof to the housing 54 and at the other end thereof to the horn antenna connects the transceiver device to the horn antenna, to guide the electromagnetic signal 42 from the transmitter 36 of the transceiver device to the horn antenna where it is launched towards the surface 24. The reflection 44 is collected by the horn antenna and guided by the waveguide 46 to the receiver 38 of the transceiver device. As shown in figure 4, an inlet 68 for a suitable cooling fluid may be defined in the waveguide 46, to cool the horn antenna from the inside.

As shown in figure 2 and 3, the transceiver device 36,38 may be located externally the vessel adjacent an external face of the at least one sidewall 16 or base 14 of the vessel 12. The transceiver device 36, 38 may be located any suitable distance d₁ from the vessel. The transceiver device 36, 38 may be located immediately adjacent (not shown) the sidewall or spaced therefrom as shown in figures 2 and 3. In figure 2, the transceiver device 36, 38 is located at a level lower than the upper level lᵤ of the upper surface 24 and in figure 3, the transceiver device 36, 38 is located at a level between the upper level lᵤ and the lower level lₗ of the upper surface 24.

It will be appreciated that the waveguide 46 must have the required length to connect the transceiver device 36, 38 at its position referred to above to the horn antenna 40 in the roof region of the vessel.

Another example embodiment of the electric furnace 10 is shown in figure 4. In this embodiment, the transceiver device comprising the transmitter 36 and the receiver 38 housed in the OM housing 54 is located at any level relative to the layer 22, including at a level higher than the upper level lᵤ of the upper surface 24, and beyond a first line 39 which is spaced a distance d₀ > 0 from the layer on a second line 41 perpendicular to the centre axis 19 and which first line 39 extends parallel to the centre axis 19. In this particular embodiment the transceiver device 36, 38 may be located at a level several meters higher than the roof 18.

Electromagnetic interference (EMI) in the furnace above the layer 22, which mainly emanates from the electrodes 23 which are energized at 50 Hz, is attenuated by the sidewalls 16 and distance (by virtue of the inverse-square law) sufficiently and to such an extent that a special EMI shield is not required for the radar transceiver device 36, 38 in OM housing 54 or any other part of the non-contact sensor 30.

In figure 5, one example embodiment of a feed assembly 70 is shown. The assembly comprises a box 72 defining an inlet 74 for feed material in a top wall of the box and an outlet 76 for the feed material in a bottom wall of the box. The outlet 76 is linearly offset relative to the inlet 74. Hence, a curved passage way 78 for feed material extends between the inlet 74 and the outlet 76. The horn antenna 40 is mounted in or on the box directly above the outlet 76, so that it has a direct line of sight through the outlet and so that there is a straight path through the outlet 76 for the signal 42 and the reflection 44 between the antenna 40 and the surface 24.

A thermal shielding system 80 to protect the antenna 40 against radiant heat from the process in the furnace may be provided. The shielding system may comprise a selectively openable and closable shutter 82 between the antenna and the outlet 76 (and hence the process) and optionally a sidewall 84 between the antenna 40 and the passage way 78. The shutter 82 may be in the form of a "slide gate" or flap which may selectively be controlled by at least one of: manual, electrical, hydraulic or pneumatic controls 86.

## Claims

1. An electric furnace (10) comprising:
- at least one electrode (23);
- a vessel (12) comprising a base (14), at least one sidewall (16) and a roof region comprising a roof (18), the vessel holding a body (20) of material to be processed, the vessel having a centre axis (19) extending between the roof and the base and the body of material comprising at least one layer (22) having an upper surface (24) having an upper level (lᵤ) and a lower level (lₗ), the at least one electrode extending through the roof into the vessel; and
- at least one non-contact sensor (30.1), (30.2) for sensing a distance (32) between a reference point (34) and a position on the upper surface (24), the non-contact sensor comprising an electromagnetic signal transmitter (36), an electromagnetic signal receiver (38), a launcher (40) of the electromagnetic signal towards the upper surface and which launcher is located spaced above the upper surface in the roof region of the furnace, a collector (40) for a reflection of the launched signal from the upper surface, a signal guide (46) between at least one of a) the transmitter (36) and the launcher (40) and b) the receiver (38) and the collector (40) and wherein at least one of the transmitter (36) and the receiver (38) is located externally the vessel (12) at one of: a) a level lower than the upper level (lᵤ) of the upper surface (24); and b) a level higher than the upper level (lᵤ) of the upper surface (24) and beyond a first line (39) which is spaced a distance d₀ > 0 from the layer on a second line (41) perpendicular to the centre axis and which first line (39) extends parallel to the centre axis.

2. The furnace as claimed in claim 1 wherein the layer is a top layer of feed material.

3. The furnace as claimed in any one of claim 1 and claim 2 wherein the at least one non-contact sensor is connected to a controller for generating data relating to the sensed distance.

4. The furnace as claimed in claim 3 comprising a plurality of said non-contact sensors connected to the controller, each of said non-contact sensors for sensing a respective distance between a respective reference point and a respective one of distributed positions on the upper surface, the controller being operative to generate from the respective sensed distances profile data relating to the upper surface.

5. The furnace as claimed in any one of claims 1 to 4 wherein the transmitter and the receiver are located at a level lower than the upper level of the upper surface.

6. The furnace as claimed in claim 5 wherein the transmitter and the receiver are located adjacent an external face of the at least one sidewall of the vessel.

7. The furnace as claimed in any one of claims 5 and 6 wherein the transmitter and the receiver are located spaced from the vessel.

8. The furnace as claimed in any one of claims 1 to 4 wherein the transmitter and the receiver are located at a level higher than the upper level of the upper surface.

9. The furnace as claimed in any one of claims 1 to 8 wherein the at least one non-contact sensor comprises any one of: a laser sensor, an automated sounding sensor, an acoustic sensor, an optical sensor, a Muon particle sensor, a pulsed or frequency modulated electromagnetic sensor, an ultrasound sensor and a yo-yo sensor.

10. The furnace as claimed in any one of claims 1 to 8 wherein the at least one non-contact sensor comprises a radar sensor.

11. The furnace as claimed in claim 10 wherein the radar sensor comprises a microwave radar transceiver device, an antenna serving as the launcher and the collector and a waveguide connecting the transceiver device to the antenna.

12. The furnace as claimed in claim 11 wherein the antenna is a horn antenna.

13. The furnace a claimed in any one of claims 1 to 12 comprising a material feed arrangement at a feed port in the roof, the material feed arrangement comprising a box defining an inlet for feed material in a top wall of the box and an outlet for feed material in a bottom wall of the box, the inlet being linearly offset relative to the outlet and wherein the launcher and collector are located directly in line with the outlet to have a line of sight through the outlet.

14. An electric furnace (10) comprising:
- at least one electrode (23);
- a vessel (12) comprising a base (14), at least one sidewall (16) and a roof region comprising a roof (18), the vessel holding a body (20) of material to be processed, the vessel having a centre axis (19) extending between the roof and the base and the body of material comprising at least one layer (22) having an upper surface (24), the at least one electrode extending through the roof into the vessel; and
- at least one non-contact sensor (30.1), (30.2) for sensing a distance (32) between a reference point (34) and a position on the upper surface (24), the non-contact sensor comprising an electromagnetic signal transceiver device (36, 38), an antenna (40) located spaced above the upper surface in the roof region of the furnace and a signal guide (46) extending between the electromagnetic signal transceiver device and the antenna and wherein the transceiver device is located externally the vessel (12) at a predetermined position where at least one of the vessel and distance attenuates electromagnetic interference (EMI) inside the vessel to such an extent that an EMI shield for the transceiver device over and above an original manufacturer housing for the transceiver device is dispensed with.

15. A method of operating an electric furnace comprising a vessel (12) comprising a base (14), at least one sidewall (16) and a roof region comprising a roof (18), the vessel holding a body (20) of material to be processed, the body of material comprising at least one layer (22) having an upper surface (24); at least one electrode (23) extending through the roof into the vessel; and at least one non-contact sensor (30.1), (30.2) for sensing a distance (32) between a reference point (34) and a position on the upper surface (24), the non-contact sensor comprising an electromagnetic signal transceiver device (36, 38), an antenna (40) located spaced above the upper surface in the roof region of the furnace and a signal guide (46) extending between the electromagnetic signal transceiver device and the antenna, the method comprising:
- locating the transceiver device externally the vessel (12);
- utilizing the signal guide and at least one of the vessel and distance to the transceiver device to attenuate electromagnetic interference (EMI) existing inside the vessel to such an extent that at the transceiver device no EMI shield for the transceiver device over and above an original manufacturer housing for the transceiver device is provided.
